# FASCICULE DE BREVET EUROPEEN

(11) **EP 3 328 802 B1**
(45) Date de publication et mention de la délivrance du brevet: **03.10.2018**
(21) Numéro de dépôt: 16736199.7
(22) Date de dépôt: 08.07.2016
(51) Int. Cl.: C02F 11/18

(54) **PROCEDE ET INSTALLATION POUR L'HYDROLYSE THERMIQUE SEMI-CONTINUE DES BOUES**
VERFAHREN UND ANLAGE ZUR HALBKONTINUIERLICHEN THERMISCHEN HYDROLYSE VON SCHLAMM
PROCESS AND FACILITY FOR SEMI-CONTINUOUS THERMAL HYDROLYSIS OF SLUDGE

(30) Priorité: 31.07.2015 FR 1557397
(43) Date de publication de la demande: 06.06.2018
(73) Titulaire: Veolia Water Solutions & Technologies Support, 94417 Saint-Maurice Cedex (FR)
(72) Inventeur: AUPETIT, Thierry, 94360 Bry sur Marne (FR)
(74) Mandataire: Vidon Brevets & Stratégie
(86) Numéro de dépôt international: PCT/EP2016/066255
(87) Numéro de publication internationale: WO 2017/021097

(56) Documents cités:
- FR-A1- 3 015 971
- US-A1- 2004 168 990
- US-A1- 2012 111 515

## Description

### Domaine de l'invention

L'invention concerne le domaine du traitement des effluents constitués de, ou fortement chargés en, matières organiques fermentescibles et notamment celui des boues issues des processus de dépollution des eaux usées urbaines ou industrielles ou des boues issues du traitement des bio-déchets industriels ou agricoles. Ces effluents sont ci-après désignés d'une façon générale par le terme « boues ».

### Art antérieur

Actuellement, une partie des boues produites par les stations d'épuration est valorisée dans le domaine agricole et une autre partie incinérée ou traitée d'autres manières. Toutefois, ces boues doivent de plus en plus faire l'objet d'un traitement dans des filières spécifiques.

La production de ces boues étant de plus en plus importante, il est en effet nécessaire que celles-ci ne présentent pas de danger pour l'environnement et la santé humaine. De fait, ces boues contiennent des germes dont certains sont pathogènes (bactéries conformes, salmonelles, oeufs d'helminthes,...). De plus, elles sont très fermentescibles et sont à l'origine de la production de gaz (amines, sulfure d'hydrogène, mercaptans...) qui engendrent des nuisances olfactives. Ces considérations expliquent la nécessité de mettre en oeuvre, sur les filières de traitement indiquées ci-dessus, au moins une étape de stabilisation de ces boues visant à obtenir des boues n'évoluant plus, ou à tout le moins, évoluant peu rapidement, tant sur le plan biologique que sur le plan physico-chimique.

Une préoccupation importante réside dans la volonté de réduire le volume de ces boues, et/ou de valoriser les boues sous forme de biogaz.

Parmi les procédés proposés dans l'état de la technique pour traiter ces boues, l'hydrolyse thermique est considérée comme un procédé particulièrement intéressant.

L'hydrolyse thermique des boues consiste à traiter celles-ci à une température élevée et sous pression de façon à les hygiéniser (c'est-à-dire à abattre très fortement leur teneur en micro-organismes notamment pathogènes), à solubiliser une partie importante des matières particulaires et à transformer la matière organique qu'elles contiennent en matière soluble facilement biodégradable (en acides gras volatils par exemple).

Une telle hydrolyse thermique des boues pourra être prévue en amont ou en aval d'une étape de digestion anaérobie.

Il a été proposé une technique d'hydrolyse de boues décrite dans FR2820735. Cette technique consiste à mettre en oeuvre au moins deux réacteurs fonctionnant en parallèle dans chacun desquels des lots de boues subissent un cycle complet d'hydrolyse thermique. Chacun des cycles d'hydrolyse thermique mis en oeuvre dans un réacteur comprend les étapes consistant à alimenter les boues à traiter dans le réacteur, à y injecter de la vapeur de récupération (« vapeur de flash ») pour récupérer de la chaleur dans les boues, à y injecter de la vapeur vive pour les amener à une pression P et à une température T permettant l'hydrolyse, à les maintenir à cette pression P et à cette température T pendant un certain temps, à ramener les boues à une pression proche de la pression atmosphérique en libérant de la vapeur de flash qui est recyclée pour préchauffer les boues à traiter du réacteur en parallèle, et à vidanger le réacteur des boues ainsi hydrolysées.

Selon cette technique, il est prévu que le cycle soit décalé dans le temps d'un réacteur à l'autre pour utiliser la vapeur de flash produite à partir d'un réacteur pour l'injecter dans l'autre réacteur. Une telle mise en oeuvre permet de profiter de la vapeur de flash produite dans un des réacteurs pour alimenter en vapeur l'autre réacteur.

Un tel procédé peut être mis en oeuvre dans des installations simples à utiliser, les étapes de remplissage, d'hydrolyse, de dépressurisation et de vidange étant effectuées dans le même réacteur. Il permet ainsi de minimiser la vitesse d'encrassage de ces installations, de minimiser les odeurs en l'absence de passage des boues d'un réacteur à l'autre, et de réduire les besoins en vapeur vive.

On notera que, selon cette technique, l'injection de vapeur de flash est effectuée via un injecteur de vapeur dans le lit de boues du réacteur. Une telle configuration conduit à des pertes de charge importantes, d'une part dues à la configuration de l'injecteur de vapeur et d'autre part dues à la hauteur de boues dans le réacteur au-dessus de l'injecteur. Afin de minimiser ces pertes de charge, il est nécessaire en pratique d'utiliser des réacteurs présentant une hauteur importante pourvus de plusieurs injecteurs répartis sur cette hauteur. La vapeur peut ainsi être distribuée en plusieurs points dans la colonne de boue grâce à ces différents injecteurs. Corollairement, les réacteurs doivent être équipés d'autant de passerelles que de niveau d'injection de vapeur afin d'assurer la maintenance de ces injecteurs, ce qui complexifie leur construction et augmente leur coût.

Afin de limiter la consommation de vapeur tout en améliorant l'efficacité de l'hydrolyse thermique des boues, notamment celles ayant une siccité élevée, il a été proposé un autre procédé d'hydrolyse thermique décrit dans FR2990429. Un tel procédé est mené dans au moins deux réacteurs fonctionnant en parallèle dans chacun desquels les boues subissent un cycle complet d'hydrolyse thermique, ledit cycle étant décalé dans le temps d'un réacteur à l'autre pour utiliser la vapeur de flash produite à partir d'un réacteur pour l'injecter dans l'autre réacteur. Le procédé comprend une étape consistant à extraire une partie des boues contenues dans un réacteur d'hydrolyse thermique puis à les réintroduire dans ce réacteur, c'est-à-dire consistant à recirculer une partie du contenu d'un réacteur d'hydrolyse thermique dans lui-même.

Un tel procédé ne donne toutefois pas pleinement satisfaction. En effet, il conduit à rallonger les durées des cycles et donc à augmenter la taille des installations le mettant en oeuvre. De plus, il conduit à introduire la vapeur de flash dans des boues non préchauffées, ce qui ne favorise pas le transfert thermique de la vapeur vers les boues. En pratique, il est nécessaire de maintenir dans chaque réacteur d'hydrolyse thermique un reliquat (« talon ») de boues chaudes qui représente environ 10% du volume du réacteur et de limiter le remplissage de ces réacteurs. A chaud, les réacteurs ne peuvent être remplis au-delà de 70 % de leur capacité volumique. Enfin, la siccité des boues pouvant être traitées par ce procédé reste en pratique limitée à 18 % de matières sèches.

Quoique mettant en oeuvre des cycles de traitement par hydrolyse thermique de boues par lots (« batch ») à l'aide de plusieurs réacteurs d'hydrolyse thermique, ces techniques permettent aussi une alimentation en boues à traiter et une vidange des boues pouvant être continues. On les qualifie ainsi de procédés «semi-continus » ou encore de procédé «continus sériels ». Ces procédés permettent de garantir que chaque lot de boues subit un temps d'hydrolyse thermique donné.

On connaît aussi dans l'art antérieur, selon FR3010403 un procédé de traitement de boues par hydrolyse thermique mis en oeuvre complètement en continu. Ce procédé comprend les étapes consistant à injecter de la vapeur de récupération dans les boues et à les mélanger avec celles-ci grâce à un injecteur-mélangeur dynamique primaire de façon à obtenir un mélange uniforme primaire ; à injecter et à mélanger de la vapeur vive dans ce mélange uniforme primaire au moyen d'un injecteur-mélangeur dynamique secondaire de façon à obtenir un mélange uniforme secondaire ; à acheminer le mélange uniforme secondaire vers un réacteur tubulaire sous pression et provoquer l'écoulement essentiellement en flux piston de ce mélange uniforme secondaire dans ledit réacteur selon un temps de séjour suffisant et à une température suffisante pour permettre l'hydrolyse thermique de la matière organique présente dans ce mélange uniforme secondaire ; à produire ladite vapeur de récupération au sein de moyens de production de vapeur de récupération à partir dudit mélange uniforme secondaire obtenu en sortie dudit réacteur tubulaire ; à refroidir ledit mélange uniforme secondaire à sa sortie desdits moyens de production de vapeur de récupération à une température permettant la digestion ultérieure de la matière organique hydrolysée qu'il contient.

Une telle technique, très prometteuse, implique toutefois la nécessité de devoir parfois installer plusieurs lignes de traitement pour satisfaire la demande de traitement en boues.

Les documents US2012/0111515 et US2004/0168990 décrivent d'autres procédés d'hydrolyse thermique de boues.

Toutes les techniques décrites ci-dessus présentent l'avantage de mettre en oeuvre de la vapeur de récupération produite par dépressurisation d'un réacteur d'hydrolyse thermique. Les canalisations et pompes prévues à cet effet sont toutefois soumises à des contraintes de pressions et de températures nécessitant entretien et surveillance et pouvant à terme les fragiliser. Elles complexifient donc quelque peu la structure des installations et l'entretien de celles-ci.

### Objectifs de l'invention

Un objectif de la présente invention est de proposer un procédé d'hydrolyse thermique de boues « semi-continu » offrant une alternative aux procédés connus de l'art antérieur décrits ci-dessus.

Un objectif de la présente invention est ainsi de décrire un tel procédé qui présente les avantages :
- de traiter par hydrolyse thermique des boues par lots, c'est-à-dire sans risques de migration de particules d'un lot à l'autre, tout en pouvant être mise en oeuvre dans des installations accueillant des boues à hydrolyser en continu et évacuant des boues hydrolysées également en continu ;
- d'assurer que chaque particule de boues subit une hydrolyse thermique pendant un temps prédéterminé suffisant.

Un autre objectif de l'invention est de proposer un tel procédé pouvant être mis en oeuvre dans des installations moins complexes à réaliser que celles utilisées pour les procédés de l'art antérieur. Notamment, un objectif de l'invention est de décrire une installation présentant, à capacités de traitements sensiblement égales, moins de passerelles, moins de canalisations, moins de vannes et une emprise au sol moins importante que les installations mettant en oeuvre les procédés de l'art antérieur «semi-continus » décrits ci-dessus.

Un objectif de la présente invention est notamment de divulguer un tel procédé pouvant être mis en oeuvre, dans au moins certains modes de réalisation, dans des installations ne mettant pas en oeuvre d'injecteurs de vapeur dans le réacteur d'hydrolyse thermique.

### Exposé de l'invention

Ces objectifs, ainsi que d'autres qui apparaitront par la suite, sont atteints grâce à l'invention qui concerne un procédé d'hydrolyse thermique de boues caractérisé en ce qu'il comprend:
la pressurisation de boues à traiter à une pression de référence comprise entre 2 bar a et 16 bar a,
l'injection de vapeur vive dans lesdites boues pressurisées de façon à amener la température de celles-ci entre 120°C et 200 °C,
l'application auxdites boues pressurisées et chauffées d'un cycle de traitement d'hydrolyse thermique comprenant les étapes consistant à :
   a) acheminer un lot de boues chauffées et pressurisées dans un espace réactionnel,
   b) maintenir ledit lot de boues dans ledit espace réactionnel pendant une durée suffisante à son hydrolyse thermique,
   c) vidanger ledit espace réactionnel dudit lot de boues,
le refroidissement desdites boues hydrolysées,
la dépressurisation desdites boues hydrolysées,
et leur évacuation,
l'application auxdites boues d'un cycle de traitement d'hydrolyse thermique étant menée parallèlement dans au moins trois espaces réactionnels dans chacun desquels est mis en oeuvre une succession de cycles de traitement, chacun desdits espaces réactionnels étant dédié au traitement de lots de boues distincts, lesdites étapes a), b), et c) desdits cycles de traitement étant décalées dans le temps d'un espace réactionnel à l'autre,
un ciel gazeux commun audit au moins trois espaces réactionnels étant ménagé, et la pression régnant dans ledit ciel gazeux commun étant mesurée et maintenue essentiellement constante à ladite pression de référence.

Le procédé selon l'invention propose donc de ne pas isoler les ciels gazeux des différents espaces réactionnels. Ainsi, le ciel gazeux commun sert de chambre de rééquilibrage de pressions de ces espaces réactionnels lors des étapes a) de remplissage d'un espace réactionnel et c) de vidange d'un autre espace réactionnel. En pratique, la vidange d'un espace réactionnel permet le remplissage concomitant d'un autre espace réactionnel.

Afin de ménager un tel ciel gazeux commun à l'ensemble des espaces réactionnels, il est ainsi possible de s'affranchir de la mise en oeuvre de vannes isolant le ciel gazeux de chaque espace réactionnel. Ceci simplifie la conception et la réalisation, où à tout le moins l'utilisation des installations pour la mise en oeuvre d'un tel procédé.

Par ailleurs, l'injection de vapeur vive en amont des espaces réactionnels rend l'utilisation d'injecteurs de vapeur vive dans ceux-ci non indispensable. Il est ainsi possible de réduire le nombre de passerelles desservant ces espaces réactionnels et permettant l'installation et la maintenance de tels injecteurs.

On notera aussi que le procédé selon l'invention ne met pas en oeuvre de dépressurisation des boues au sein des espaces réactionnels. En effet, les boues sont dépressurisées après avoir subi un cycle de traitement dans l'un de ces espaces et avoir été vidangées de celui-ci.

Préférentiellement, le procédé selon l'invention comprend une étape d'ajustement de la pression régnant dans ledit ciel gazeux commun, ladite étape d'ajustement comprenant l'injection d'un gaz dans ledit ciel gazeux commun, lorsque ladite pression régnant dans celui-ci est inférieure à un seuil inférieur prédéterminé, et/ou l'évacuation d'une partie du gaz présent dans ledit ciel gazeux commun, lorsque ladite pression régnant dans celui-ci est supérieure à un seuil supérieur prédéterminé.

Les seuils supérieur et inférieur de pression seront déterminés autour de ladite pression de référence souhaitée pour l'hydrolyse thermique des boues, elle-même variant en fonction de la nature et/ou de la composition des boues à traiter.

On notera que le gaz en question pourra avantageusement être de la vapeur vive. Il pourra aussi s'agir d'un autre gaz, tel qu'un gaz inerte : azote (N₂), dioxyde de carbone (CO₂), air notamment.

Dans un cas comme dans l'autre, il sera prévu des moyens d'injection de ce gaz dans ledit ciel gazeux commun.

Quoique ladite étape d'ajustement de la pression régnant dans le ciel gazeux commun pourra être effectuée manuellement en fonction des mesures de pression effectuées, cet ajustement sera préférentiellement mis en oeuvre de façon automatique.

Egalement préférentiellement, l'injection de vapeur dans lesdites boues pressurisées est effectuée de façon à amener lesdites boues à une température comprise entre 140°C et 180°C. Cette température d'hydrolyse thermique pourra être choisie en fonction notamment de la nature des boues et de la finalité recherchée par le procédé (hygiénisation, solubilisation...).

Egalement préférentiellement, ladite pression de référence sera comprise entre 3,5 bar a et 10 bar a.

Egalement selon une variante avantageuse, l'injection de vapeur vive dans lesdites boues est mise en oeuvre grâce à des moyens compris dans le groupe constitué par les injecteurs-mélangeurs dynamiques et les diffuseurs de vapeur en ligne. On notera que l'on entend dans la présente description par :
- Injecteur-mélangeur dynamique : tout mélangeur constitué d'une chambre accueillant un injecteur de vapeur et de moyens permettant de provoquer une agitation, grâce à des éléments mécaniques motorisés, des différentes phases entrant dans cette chambre afin d'obtenir en sortie un mélange uniforme ; de tels éléments mécaniques motorisées peuvent, par exemple, être constitués de pales ou de vis mues par un rotor, ou de tout autre moyen de mélange également mus par un rotor; avantageusement, la chambre est cylindrique et munie de pales rotatives, ayant une géométrie adaptées, montées sur un axe tournant à une vitesse de rotation préférentiellement comprise entre 200 tours/min et 4000 tours/min correspondant à une vitesse de 1 m/s à 94 m/s ;
- diffuseur de vapeur en ligne : tout moyen d'injection et de diffusion de vapeur dans des réseaux de tuyauteries, sans agitation mécanique motorisée.

De tels équipements permettent l'obtention en sortie de boues essentiellement homogènes. Le temps de séjour de ces boues dans de tels équipement est très court : de 1 seconde jusqu'à un maximum de 5 minutes. Les injecteurs-mélangeurs dynamiques permettent de surcroit d'abaisser la viscosité des boues et ainsi de favoriser leur mélange avec la vapeur.

Avantageusement, le procédé comprend une étape de préchauffage des boues entrantes en amont de l'injection de vapeur vive.

Egalement avantageusement, le refroidissement des boues hydrolysées produit de la vapeur de récupération et le mélange de vapeur de récupération avec lesdites boues entrantes pour leur préchauffage.

Préférentiellement, la vapeur de récupération est injectée dans lesdites boues en amont de ladite étape d'injection de vapeur vive grâce à au moins un moyen compris dans le groupe constitué par les injecteurs-mélangeurs dynamiques, les diffuseurs de vapeur en ligne ou les pulpeurs-mélangeurs.

On notera que l'on entend dans la présente description par pulpeur-mélangeur: tout mélangeur constitué d'une cuve de mélange avec un diffuseur de vapeur, intégré à la cuve ou sur une boucle de recirculation, dont les moyens d'agitation sont mécaniques et internes (pales, pompes immergées...) ou externes (pompe dans une boucle de recirculation).

Préférentiellement, chacune desdites étapes a), b) et c) dudit cycle présente une durée comprise entre 10 mn et 120 mn, avantageusement entre 15 mn et 30 mn. Selon l'invention, lesdites étapes a), b) et c) sont menées concomitamment dans lesdits au moins trois espaces réactionnels.

On notera que, dans le cadre de la présente invention, le procédé selon celle-ci pourra mettre en oeuvre plus de trois espaces réactionnels.

Avantageusement, ledit lot de boues à traiter présente une siccité comprise entre 10% et 40 % en poids de matières sèches. Afin de présenter la siccité souhaitée pour leur traitement grâce au procédé selon l'invention, les boues à traiter pourront être préalablement diluées, notamment avec de l'eau chaude.

L'invention concerne également toute installation caractérisée en ce qu'elle comprend :
des moyens d'amenée de boues ;
des moyens de pressurisation desdites boues ;
des moyens d'amenée de vapeur vive et des moyens de mélange de ladite vapeur vive avec lesdites boues ;
des moyens de distribution de lots de boues depuis lesdits moyens de mélange alternativement dans au moins trois espaces réactionnels pour l'hydrolyse thermique desdites boues ;
des moyens d'évacuation desdits lots de boues hydrolysées alternativement depuis chacun desdits au moins trois espaces réactionnels vers des moyens de refroidissement et des moyens de dépressurisation desdites boues hydrolysées ;
des moyens d'évacuation des boues hydrolysées dépressurisées ;
lesdits au moins trois espaces réactionnels présentant un ciel gazeux commun et ledit ciel gazeux commun étant pourvu de moyens d'évacuation de gaz et de moyens de mesure de la pression y régnant.

Le ciel gazeux commun dont est pourvue l'installation permet l'équilibrage des pressions dans les différents espaces réactionnels à la pression de référence souhaitée pour l'hydrolyse thermique. Les moyens de mesure de la pression dans ce ciel gazeux permettent de surveiller que cette pression est bien observée. Les moyens d'évacuation de gaz, outre l'évacuation des gaz incondensables, permettent quant à eux d'abaisser cette pression si la pression ainsi mesurée est trop élevée.

Selon une variante, lesdits moyens de mélange de ladite vapeur vive avec lesdites boues comprennent au moins un injecteur-mélangeur dynamique (tel que défini ci-dessus) et/ou au moins un diffuseur de vapeur en ligne (tel que défini ci-dessus) relié auxdits moyens d'amenée de vapeur vive.

Selon une variante, ledit ciel gazeux commun aux espaces réactionnels est non seulement pourvu de moyens d'évacuation de gaz mais aussi de moyens d'injection de gaz. Ainsi, si la pression mesurée dans ledit ciel gazeux commun est en deçà d'un seuil inférieur, il est possible d'injecter un gaz permettant de faire remonter cette pression à hauteur de la pression de référence.

Selon une variante de l'invention, lesdits espaces réactionnels sont chacun délimités par une structure de réacteur.

Dans un tel cas de figure, le ciel gazeux commun est avantageusement constitué par l'ensemble des parties supérieures des structures de réacteur non remplies de boues et par l'ensemble des canalisations allant de chaque structure de réacteur vers lesdits moyens d'évacuation de gaz.

Selon une autre variante, lesdits espaces réactionnels sont regroupés en une unique structure de réacteur, chacun desdits espaces réactionnels constituant un compartiment de ladite unique structure de réacteur. Cette structure de réacteur pourra être cylindrique et les compartiments pourront avantageusement présenter la forme d'une portion de cylindre. Une telle configuration des espaces réactionnels permet une optimisation de l'emprise au sol de la structure de réacteur.

Dans un tel cas de figure, ledit ciel gazeux commun est avantageusement constitué par un espace prévu dans la partie supérieure du réacteur commun aux compartiments le formant et par l'ensemble des canalisations allant de chaque structure de réacteur vers lesdits moyens d'évacuation de gaz.

Egalement selon une variante de l'invention, l'installation comprend une cuve de secours dimensionnée pour accueillir au moins un lot de boues et des moyens de distribution de lots de boues depuis ledit au moins un injecteur-mélangeur dynamique ou diffuseur de vapeur en ligne ou pulpeur-mélangeur vers ladite cuve de secours. Une telle cuve de secours pourra être utilisée pour appliquer à un ou plusieurs lots de boues des cycles de traitement d'hydrolyse thermique, durant des périodes pendant lesquelles l'un des espaces réactionnels sera en maintenance. En pratique, l'espace réactionnel en maintenance sera alors isolé par la fermeture d'un jeu de vannes et cette cuve de secours sera mise en oeuvre par l'ouverture d'un autre jeu de vannes.

Dans le cadre de la présente invention, les moyens de refroidissement des boues hydrolysées pourront être prévus sous différentes formes. Préférentiellement, ces moyens seront choisis dans le groupe constitué par les échangeurs de chaleur, les moyens de dilution des boues hydrolysées avec de l'eau industrielle, les moyens d'injection de boues fraiches dans lesdites boues hydrolysées, les moyens de génération de vapeur de récupération.

Lorsqu'un échangeur de chaleur sera mis en oeuvre, on pourra utiliser un échangeur comprenant une entrée des boues à traiter à réchauffer et une entrée de boues hydrolysées à refroidir. Ce type d'échangeur de chaleur est qualifié d'échangeur boues-boues.

Lorsque ces moyens de refroidissement incluront au moins un échangeur de chaleur, la chaleur récupérée grâce à celui-ci pourra être utilisée pour le chauffage de bâtiments et pour d'autres traitements tels qu'une digestion des boues.

Les moyens de génération de vapeur de récupération pourront être constitués par une chaudière de récupération (« waste steam boiler » en anglais) ou inclure avantageusement un réservoir de flash. On notera que l'on entend dans la présente description par réservoir de flash (« flash tank » en anglais) un réservoir dans lequel la pression des boues hydrolysées est subitement abaissée provoquant concomitamment leur refroidissement et l'émission de vapeur présentant une pression élevée. Un tel réservoir constitue donc à la fois les moyens de refroidissement et les moyens de dépressurisation.

Lorsque l'installation comprendra des moyens de génération de vapeur de récupération, celle-ci inclura préférentiellement au moins une canalisation d'amenée de ladite vapeur de récupération en amont desdits moyens de mélange de la vapeur vive avec les boues et des moyens de mise en contact de ladite vapeur de récupération avec lesdites boues à traiter. Cette mise en contact permettra alors de préchauffer les boues à coût réduit. Afin de favoriser cette mise en contact, l'installation inclura préférentiellement au moins l'un des moyens parmi un pulpeur-mélangeur, un injecteur-mélangeur dynamique, un diffuseur de vapeur en ligne (tels que définis ci-dessus).

### Liste des figures

L'invention, ainsi que les différents avantages qu'elle présente, seront plus facilement compris grâce à la description qui va suivre de quatre exemples non limitatifs de réalisation de celle-ci, donnés en référence aux dessins dans lesquels :
la figure 1 représente de façon schématique un premier mode de réalisation d'une installation selon l'invention dans lequel les espaces réactionnels sont chacun délimités par une structure de réacteur;
la figure 2 représente de façon schématique un second mode de réalisation d'une installation selon l'invention dans lequel les espaces réactionnels sont regroupés dans une unique structure de réacteur;
la figure 3 représente de façon schématique un troisième mode de réalisation d'une installation selon l'invention dans lequel les espaces réactionnels sont chacun délimités par une structure de réacteur, l'installation comprenant de plus une cuve de secours permettant d'assurer la maintenance des espaces réactionnels ;
la figure 4 représente de façon schématique un quatrième mode de réalisation d'une installation selon l'invention.

### Description de modes de réalisation

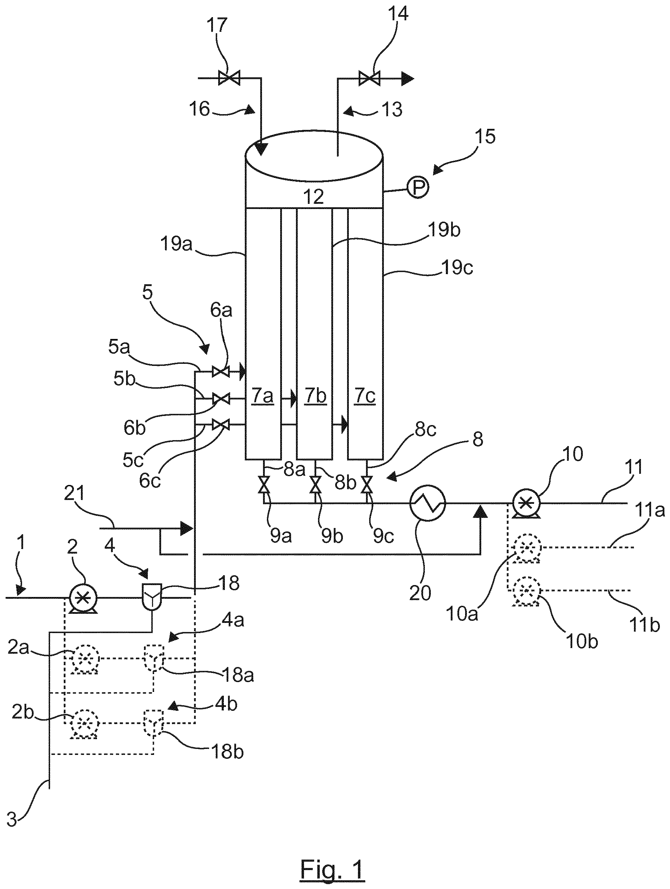

En référence à la figure 1, l'installation représentée comprend des moyens d'amenée de boues 1 comprenant une canalisation principale présentant deux dérivations 1a, 1b. La canalisation principale et ses dérivations sont chacune équipée d'une part de moyens de pressurisation 2, 2a, 2b des boues incluant chacun une pompe et d'autre part de moyens de mélange 4, 4a, 4b des boues pressurisées avec de la vapeur (d'eau) vive incluant chacun un injecteur-mélangeur dynamique 18, 18a, 18b. On notera que, dans d'autres modes de réalisation les moyens de mélange pourront inclure au moins un diffuseur de vapeur en ligne (tel que défini ci-dessus). De tels diffuseurs sont notamment commercialisés par la société ProSonix sous la dénomination « *inline direct steam injection heater ».*

Afin de permettre le mélange des boues pressurisées avec la vapeur, l'installation comprend des moyens d'amenée de vapeur vive 3 comprenant une canalisation principale présentant deux dérivations 3a et 3b desservant respectivement les injecteurs-mélangeurs dynamiques 18, 18a, 18b. Ces moyens d'amenée de vapeur vive 3 sont reliés à une centrale de production de vapeur (non représentée sur la figure 1).

L'installation comprend également des moyens de distribution 5 de lots de boues depuis lesdits injecteurs-mélangeurs dynamique 18, 18a, 18b alternativement dans au moins trois espaces réactionnels 7a, 7b, 7c pour l'application de cycles d'hydrolyse thermique, cycles qui seront décrits ci-après en détails.

Dans ce mode de réalisation, chaque espace réactionnel 7a, 7b, 7c est individualisé par une structure de réacteur 19a, 19b, 19c respectivement. En d'autres termes, chaque espace réactionnel est délimité par les parois d'un réacteur indépendant des autres réacteurs délimitant les autres espaces réactionnels.

Les moyens de distribution 5 comprennent trois lignes de distribution 5a, 5b, 5c, équipées chacune d'une vanne d'alimentation en boues 6a, 6b, 6c respectivement et permettant de distribuer des lots de boues pressurisées et chauffées alternativement dans les trois espaces réactionnels 7a, 7b, 7c.

L'installation comprend par ailleurs des moyens d'évacuation 8 des lots de boues hydrolysées alternativement depuis chacun des trois espaces réactionnels 7a, 7b, 7c vers des moyens de dépressurisation 10, 10a, 10b comprenant chacun une pompe.

Ces moyens d'évacuation 8 comprennent trois lignes d'évacuation 8a, 8b, 8c, équipées chacune d'une vanne de vidange 9a, 9b, 9c permettant de distribuer les lots de boues hydrolysées respectivement vers les moyens de dépressurisation 10, 10a, 10b.

L'installation comprend également des moyens d'évacuation 11, 11a, 11b des boues hydrolysées comprenant chacun une canalisation.

Un échangeur de chaleur 20 est prévu sur ces moyens d'évacuation afin de récupérer et/ou d'évacuer une partie de la chaleur des boues hydrolysées évacuées, chaleur qui peut être réacheminée vers une centrale de production de vapeur ou bien utilisée pour chauffer des bâtiments ou pour un autre traitement tel qu'une digestion.

L'installation comprend aussi un réseau d'eau 21 permettant de diluer les boues à la sortie des espaces réactionnels.

L'échangeur de chaleur 20 et le réseau d'eau 21 constituent des moyens de refroidissement des boues hydrolysées. Comme précisé ci-dessus, d'autres moyens de refroidissement pourront être utilisés dans le cadre de la présente invention, tels que notamment une injection de boues fraiches.

Conformément à la présente invention, les trois espaces réactionnels 7a, 7b, 7c, délimités par les parois des réacteurs 19a, 19b, 19c respectivement, présentent un ciel gazeux commun 12. Ce ciel gazeux commun est pourvu de moyens d'évacuation 13 du gaz présent dans celui-ci incluant une vanne 14, et de moyens d'injection d'un gaz 16 dans celui-ci incluant une lance d'injection et une vanne 17. Le ciel gazeux commun 12 est par ailleurs pourvu de moyens de mesure de la pression 15 du gaz régnant dans celui-ci.

On notera que le ciel gazeux commun est représenté schématiquement sur la figure 1 comme un ensemble coiffant les trois réacteurs 19a, 19b, 19c. En pratique il est constitué par l'ensemble des parties supérieures des trois réacteurs 19a, 19b, 19c non remplies de boues et par l'ensemble des canalisations allant de ceux-ci jusqu'à la vanne 14.

Le fonctionnement de cette installation va maintenant être décrit. A ce sujet, on notera que, lorsque les éléments sont représentés en lignes pointillées, cela signifie que leur utilisation est facultative.

Des boues à traiter, éventuellement diluées et/ou préchauffées, sont montées à une pression comprise entre 2 bar a et 16 bar a, préférentiellement entre 3,5 bar a et 12 bar a grâce aux pompes 2, 2a, 2b puis chauffées à une température comprise entre 120°C et 200 °C préférentiellement entre 140 °C et 180 °C grâce aux injecteurs-mélangeurs 18, 18a, 18b. Grâce à de tels équipements, les boues sont intimement mélangées avec la vapeur et leur viscosité est abaissée, facilitant ainsi leur traitement ultérieur.

Un lot de ces boues, c'est à dire un volume donné, est ensuite distribué via les moyens 5 vers un des espaces réactionnels pour y subir un cycle complet d'hydrolyse thermique comprenant les étapes consistant à :
a) acheminer le lot de boues chauffées et pressurisées dans cet espace réactionnel,
b) maintenir ledit lot de boues dans cet espace réactionnel pendant une durée suffisante à son hydrolyse thermique,
c) vidanger ledit espace réactionnel dudit lot de boues grâce aux moyens de vidange.

A l'issue de ce cycle complet d'hydrolyse thermique, les boues hydrolysées sont refroidies (ici grâce à l'échangeur de chaleur 20 et l'apport d'eau par le réseau 21 mais possiblement par d'autres moyens dans le cadre d'autres modes de réalisation) puis dépressurisées grâce aux moyens de dépressurisation, et évacuées.

Conformément à l'invention, les cycles de traitement d'hydrolyse thermique sont menés parallèlement dans les trois espaces réactionnels, les étapes a), b), et c) de ces cycles étant décalées dans le temps d'un espace réactionnel à l'autre.

Selon un tel cycle, un lot de boues pressurisées et chauffées est amené lors de l'étape a), dite de remplissage, dans l'espace réactionnel 7a. Pour ce faire, la vanne 6a desservant l'espace réactionnel 7a est ouverte et la vanne de vidange 9a est fermée.

Durant cette étape a) de remplissage, le réacteur 19a délimitant l'espace réactionnel 7a est rempli entre 70% et 95 % de sa capacité volumique totale. Le volume de l'intérieur du réacteur non occupé par les boues est occupé par un ciel gazeux prévu dans la partie supérieure du réacteur durant l'étape a).

Dans le présent exemple, cette étape a) dure vingt minutes.

Durant une étape b), dite de réaction d'hydrolyse thermique, qui dans cet exemple dure vingt minutes également, l'hydrolyse thermique des boues se produit, la vanne d'alimentation 6a et la vanne d'alimentation 9a restant fermées.

A l'issue de cette étape b), la vanne 9a est ouverte ce qui provoque, lors d'une étape c), la vidange du contenu du lot de boues hydrolysées contenues dans l'espace réactionnel 7a vers l'échangeur de chaleur 20 puis vers les moyens de dépressurisation 10, 10a, 10b avant leur évacuation par les canalisations des moyens d'évacuation 11, 11a, 11b. En amont de l'échangeur 20 et en aval de celui-ci de l'eau est amenée pour concourir au refroidissement des boues hydrolysées par le réseau d'eau 21.

Cette étape c) dure également vingt minutes.

Dans le présent mode de réalisation, les étapes a), b) et c) ont une durée de vingt minutes et constituent un cycle de traitement de soixante minutes.

Ce cycle est immédiatement répété pour un, puis d'autres lots de boues à traiter dans l'espace réactionnel 7a. Les traitements de lot de boues différents se succèdent donc lors d'une succession de cycles de soixante minutes au cours desquels ces différents lots de boues transitent l'espace réactionnel 7a.

Des successions identiques de cycles de traitement sont mises en oeuvre pour d'autres lots de boues grâce aux espaces réactionnels 7b et 7c. La description des cycles de ces successions de cycles est identique à celle faite ci-dessus en référence à l'espace réactionnel 7a, sauf en ce que ce sont les vannes associées aux espaces réactionnels 7b et 7c qui sont actionnées, à savoir :
la vanne d'alimentation en boues 6b et la vanne d'évacuation 9b pour ce qui est du cycle de traitement mis en oeuvre dans l'espace réactionnel 7b ;
la vanne d'alimentation en boues 6c et la vanne d'évacuation 9c pour ce qui est du cycle de traitement mis en oeuvre dans l'espace réactionnel 7c.

Selon l'invention, les débuts de cycles de ces différentes successions de cycles, sont décalés dans le temps de façon telle que les étapes a) d'une succession de cycles menées dans un premier espace réactionnels soient concomitantes aux étapes b) d'une autre succession de cycle menées dans un second espace réactionnel et aux étapes c) d'une autre succession de cycle menées dans un troisième espace réactionnel.

Dans le présent exemple, ce décalage entre les débuts de cycle de chaque succession de cycles est de 20 minutes.

L'alimentation en boues dans l'installation et l'évacuation des boues de l'installation sont ainsi continues.

Grâce au ciel gazeux commun 12, la pression régnant dans les différents espaces réactionnels 7a, 7b, 7c s'équilibre dans ceux-ci.

Si les moyens de mesure de la pression 15 régnant dans le ciel gazeux 12 montrent que la pression régnant dans ce ciel gazeux 15 est supérieure à un seuil supérieur prédéterminé, la vanne 15 peut être ouverte pendant un certain temps pour faire baisser cette pression et la ramener à ou aux environs de la pression de référence.

Si, au contraire, ces moyens de mesure de la pression régnant dans le ciel gazeux 12 montrent que la pression régnant dans ce ciel gazeux 15 est inférieure à un seuil inférieur prédéterminé, la vanne 17 peut être ouverte pendant un certain temps pour amener un gaz (par exemple un gaz inerte ou de la vapeur vive) dans ce ciel gazeux pour faire augmenter cette pression et la ramener à, ou aux environs de, la pression de référence.

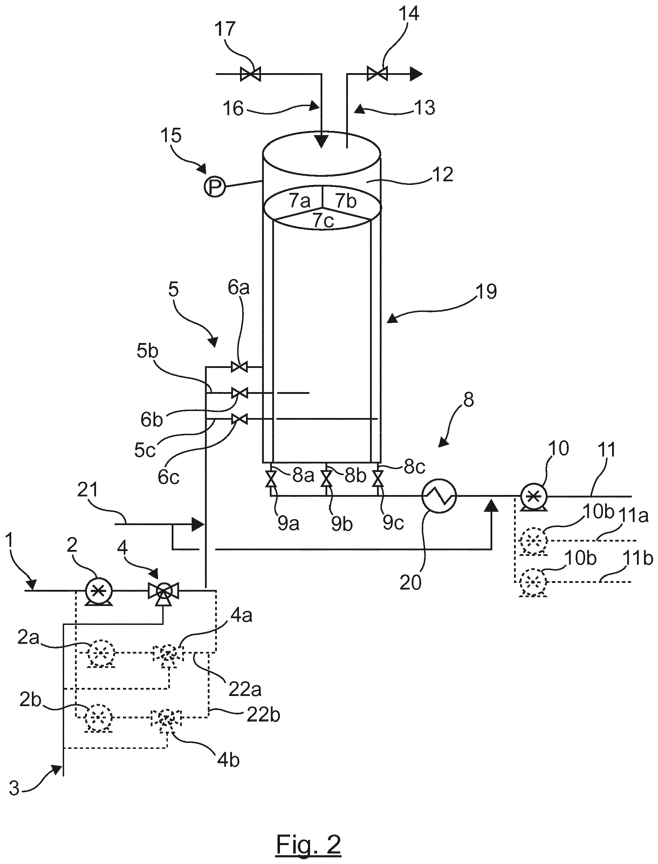

Le mode de réalisation décrit en référence à la figure 2 ne diffère de celui fait en référence à la figure 1 que par la caractéristique selon laquelle les espaces réactionnels 7a, 7b, 7c sont regroupés en une seule structure de réacteur 19 dont ils constituent des portions et en ce que des diffuseurs de vapeur en ligne 22, 22a, 22b sont utilisés en lieu et place des injecteurs-mélangeurs. Dans ce mode de réalisation, le ciel gazeux communs est constitué par la partie supérieure du réacteur. On notera que dans ce mode de réalisation, le réacteur à une forme verticale. Dans d'autres modes de réalisation, il pourra toutefois présenter une forme horizontale.

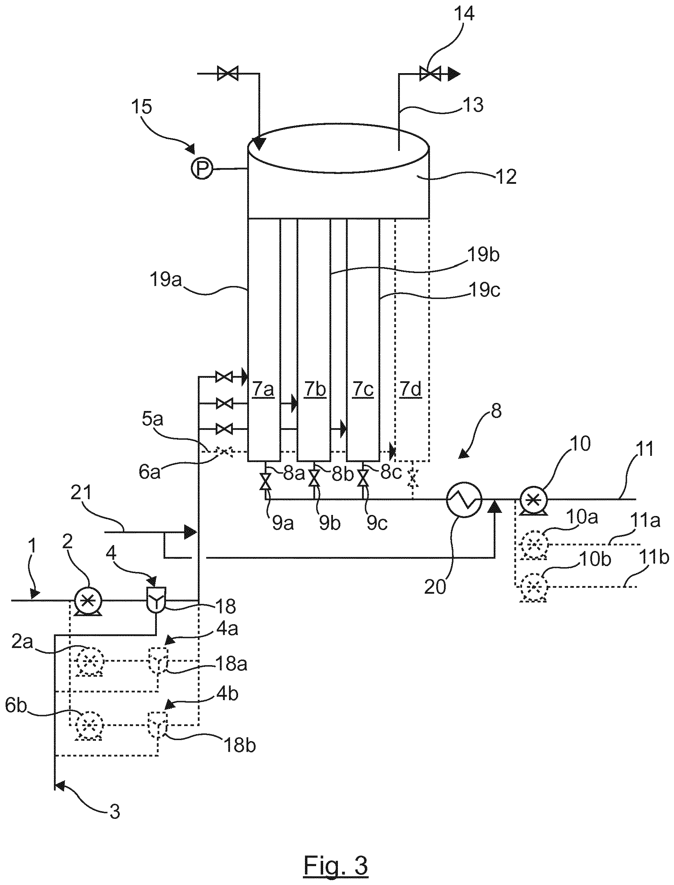

Le mode de réalisation décrit en référence à la figure 3 ne diffère de celui décrit en référence à la figure 1 que par la caractéristique selon laquelle une cuve de secours 7d prévue pour faire office d'espace réactionnel lors de la maintenance de l'un des espaces réactionnels 7a, 7b et 7c. Cette cuve 7d peut aussi être utilisée pour stocker temporairement des boues.

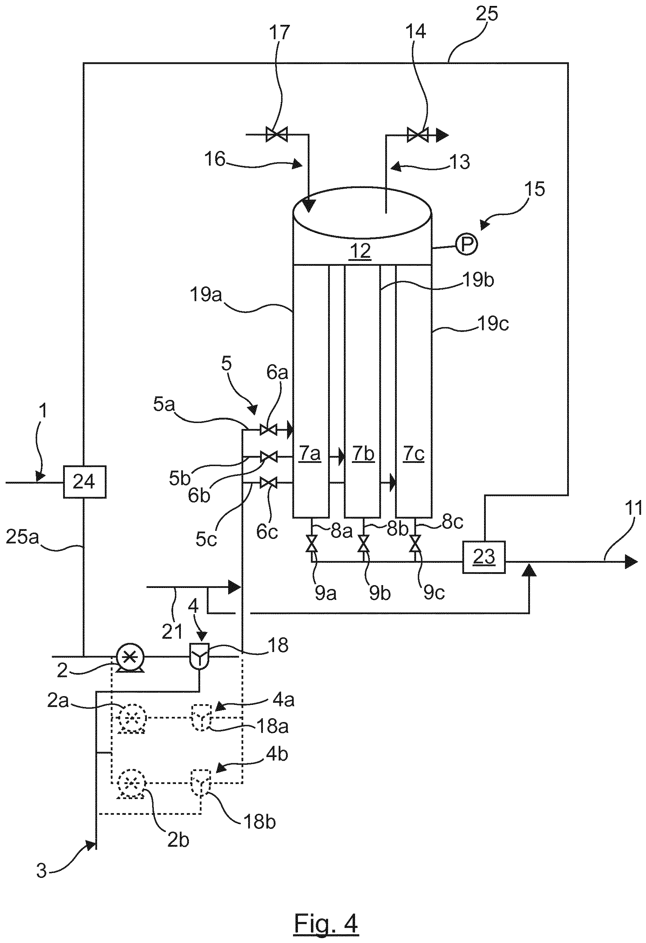

Dans le mode de réalisation selon la figure 4, les boues hydrolysées sont dépressurisées et refroidies concomitamment dans un réservoir de flash 23 prévue en sortie des espaces réactionnels 7a, 7b et 7c. Le refroidissement des boues est parfait par l'injection d'eau dans les boues sortant de ce réservoir de flash grâce au réseau d'eau 21, avant leur évacuation par une canalisation 15.

La vapeur de flash émise est acheminée via une canalisation 25 vers un pulpeur-mélangeur accueillant par ailleurs les boues entrantes. Ainsi, les boues entrantes peuvent être préchauffées à une température par exemple comprise entre 50 et 100 °C et préférentiellement entre 80 et 95°C. Les boues entrantes préchauffées sont ensuite acheminées par une canalisation 25a vers les moyens de mélanges 4, 4a, 4b de celles-ci avec de la vapeur vive. Le reste de l'installation est conforme au mode de réalisation donné en référence à la figure 1.

On notera que dans d'autres modes de réalisation, les moyens pour mettre en contact la vapeur de récupération avec les boues entrantes pourront inclure d'autres équipements qu'un pulpeur-mélangeur. Notamment, on pourra envisager dans ce cadre de mettre en oeuvre des injecteurs-mélangeurs ou des diffuseurs de vapeur en ligne tels que décrits ci-dessus.

On notera aussi que, dans d'autres modes de réalisation, les moyens de production de vapeur de récupération pourront être d'autres moyens qu'un réservoir de flash. Il pourra notamment s'agir d'une simple chaudière de récupération.

## Revendications

1. Procédé d'hydrolyse thermique de boues **caractérisé en ce qu'**il comprend:
la pressurisation de boues à traiter à une pression de référence comprise entre 2 bar a et 16 bar a,
l'injection de vapeur vive dans lesdites boues pressurisées de façon à amener la température de celles-ci entre 120 °C et 200 °C,
l'application auxdites boues pressurisées et chauffées d'un cycle de traitement d'hydrolyse thermique comprenant les étapes consistant à :
a) acheminer un lot de boues chauffées et pressurisées dans un espace réactionnel,
b) maintenir ledit lot de boues dans ledit espace réactionnel pendant une durée suffisante à son hydrolyse thermique,
c) vidanger ledit espace réactionnel dudit lot de boues,
le refroidissement desdites boues hydrolysées,
la dépressurisation desdites boues hydrolysées,
et leur évacuation,
l'application auxdites boues d'un cycle de traitement d'hydrolyse thermique étant menée parallèlement dans au moins trois espaces réactionnels dans chacun desquels est mis en oeuvre une succession de cycles de traitement, chacun desdits espaces réactionnels étant dédié au traitement de lots de boues distincts, lesdites étapes a), b), et c) desdits cycles de traitement étant décalées dans le temps d'un espace réactionnel à l'autre,
un ciel gazeux commun audit au moins trois espaces réactionnels étant ménagé, et la pression régnant dans ledit ciel gazeux commun étant mesurée et maintenue essentiellement constante à ladite pression de référence.

2. Procédé selon la revendication 1 **caractérisé en ce qu'**il comprend une étape d'ajustement de la pression régnant dans ledit ciel gazeux commun, ladite étape d'ajustement comprenant l'injection d'un gaz dans ledit ciel gazeux commun lorsque ladite pression régnant dans celui-ci est inférieure à un seuil inférieur prédéterminé et/ou l'évacuation d'une partie du gaz présent dans ledit ciel gazeux commun lorsque ladite pression régnant dans celui-ci est supérieure à un seuil supérieur prédéterminé.

3. Procédé selon la revendication 2 **caractérisé en ce que** ledit gaz est choisi dans le groupe constitué par de la vapeur vive et un gaz inerte.

4. Procédé selon l'une quelconque des revendications 2 ou 3 **caractérisé en ce que** ladite étape d'ajustement est automatique.

5. Procédé selon l'une quelconque des revendications 1 à 4 **caractérisé en ce que** l'injection de vapeur vive dans lesdites boues pressurisées est effectuée de façon à amener lesdites boues à une température comprise entre 140°C et 180°C.

6. Procédé selon l'une quelconque des revendications 1 à 5 **caractérisée** ladite pression de référence est comprise entre 3,5 bar a et 10 bar a.

7. Procédé selon l'une quelconque des revendications 1 à 6 **caractérisé en ce que** l'injection de vapeur vive est mise en oeuvre grâce à des moyens compris dans le groupe constitué par les injecteurs-mélangeurs dynamiques et les diffuseurs de vapeur en ligne.

8. Procédé selon l'une quelconque des revendications 1 à 7 **caractérisé en ce qu'**il comprend le préchauffage desdites boues entrantes en amont de l'injection de vapeur vive.

9. Procédé selon la revendication 8 **caractérisé en ce que** le refroidissement des boues hydrolysées produit de la vapeur de récupération et **en ce qu'**il comprend le mélange de vapeur de récupération avec lesdites boues entrantes pour leur préchauffage.

10. Procédé selon la revendication 8 ou 9 **caractérisé en ce que** la vapeur de récupération est injectée dans lesdites boues en amont de ladite étape d'injection de vapeur vive grâce à au moins un moyen compris dans le groupe constitué par les injecteurs-mélangeurs dynamiques, les diffuseurs de vapeur en ligne et les pulpeurs-mélangeurs.

11. Procédé selon l'une quelconque des revendications 1 à 10 **caractérisée en ce que** la durée de l'étape a) est comprise entre 10 et 120 mn, la durée de l'étape b) est comprise entre 10 et 120 mn, la durée de l'étape c) est comprise entre 10 et 120 mn.

12. Procédé selon l'une quelconque des revendications 1 à 11 **caractérisé en ce que** ledit lot de boues à traiter présente une siccité comprise entre 10% et 40 % en poids de matières sèches.

13. Installation pour la mise en oeuvre du procédé selon l'une quelconque des revendications 1 à 12 **caractérisée en ce qu'**elle comprend :
des moyens d'amenée de boues (1) ;
des moyens de pressurisation (2, 2a, 2b) desdites boues ;
des moyens d'amenée de vapeur vive (3) et des moyens de mélange (4, 4a, 4b) de ladite vapeur vive avec lesdites boues ;
des moyens de distribution (5) de lots de boues depuis lesdits moyens de mélange alternativement dans au moins trois espaces réactionnels (7a, 7b, 7c) pour l'hydrolyse thermique desdites boues ;
des moyens d'évacuation (8) desdits lots de boues hydrolysées alternativement depuis chacun desdits au moins trois espaces réactionnels (7a, 7b, 7c) vers des moyens de refroidissement et des moyens de dépressurisation (10, 10a, 10b) desdites boues hydrolysées ;
des moyens d'évacuation (11, 11a, 11b) des boues hydrolysées dépressurisées ;
lesdites au moins trois espaces réactionnels (7a, 7b, 7c) présentant un ciel gazeux commun (12) et ledit ciel gazeux commun étant pourvu de moyens d'évacuation de gaz (13) et de moyens de mesure de la pression (15) y régnant.

14. Installation selon la revendication 13 **caractérisée en ce que** lesdits moyens de mélange (4, 4a, 4b) de ladite vapeur vive avec lesdites boues comprennent au moins un injecteur-mélangeur dynamique (18, 18a, 18b) ou au moins un diffuseur de vapeur en ligne (22, 22a, 22b) relié auxdits moyens d'amenée de vapeur vive.

15. Installation selon la revendication 13 ou 14 **caractérisée en ce que** ledit ciel gazeux commun (12) est pourvu de moyens d'injection de gaz (16).

16. Installation selon l'une quelconque des revendications 13 à 15 **caractérisée en ce que** lesdits espaces réactionnels (7a, 7b, 7c) sont chacun délimité par une structure de réacteur (19a, 19b, 19c).

17. Installation selon l'une quelconque des revendications 13 à 16 **caractérisée en ce que** lesdits espaces réactionnels (7a, 7b, 7c) sont regroupés en une unique structure de réacteur (19), chacun desdits espaces réactionnels (7a, 7b, 7c) constituant un compartiment de ladite unique structure de réacteur (19).

18. Installation selon l'une quelconque des revendications 14 à 17 **caractérisée en ce qu'**elle comprend une cuve de secours (7d) dimensionnée pour accueillir au moins un lot de boues et des moyens de distribution de lots de boues depuis ledit au moins un injecteur-mélangeur dynamique ou diffuseur de vapeur en ligne vers ladite cuve de secours (7d).

19. Installation selon l'une quelconque des revendications 13 à 18 **caractérisée en ce que** lesdits moyens de refroidissement des boues hydrolysées comprennent des moyens choisis dans le groupe constitué par les échangeurs de chaleur (20), les moyens de dilution des boues hydrolysées avec de l'eau industrielle, les moyens d'injection de boues fraiches dans lesdites boues hydrolysées, les moyens de génération de vapeur de récupération.

20. Installation selon la revendication 19 **caractérisé en ce qu'**elle comprend au moins un réservoir de flash (23) produisant ladite vapeur de récupération.

21. Installation selon l'une des revendications 19 ou 20 **caractérisée en ce qu'**elle comprend au moins une canalisation d'amenée (25, 25a) de ladite vapeur de récupération en amont desdits moyens de mélange (4, 4a, 4b) de vapeur vive avec les boues et des moyens de mise en contact de ladite vapeur de récupération avec lesdites boues à traiter.

22. Installation selon la revendication 21 **caractérisé en ce que** lesdits moyens de mise en contact incluent au moins un moyen choisi parmi les injecteurs-mélangeurs dynamiques, les diffuseurs de vapeur en ligne et les pulpeurs-mélangeurs (24).

23. Installation selon la revendication 19 **caractérisée en ce que** lesdits moyens de refroidissement des boues hydrolysées incluent un échangeur de chaleur de type échangeur boues-boues.

## Patentansprüche

1. Verfahren zur thermischen Hydrolyse von Schlamm, **dadurch gekennzeichnet, dass** es Folgendes umfasst:
die Unter-Druck-Setzung des zu behandelnden Schlamms auf einen Referenzdruck im Bereich zwischen 2 bar a und 16 bar a,
die Injektion von frischem Dampf in den unter Druck gesetzten Schlamm, um die Temperatur desselben auf zwischen 120 °C und 200 °C zu bringen,
die Anwendung auf den unter Druck gesetzten und erhitzten Schlamm eines Behandlungszyklus der thermischen Hydrolyse, umfassend die folgenden Schritte:
a) Leiten einer Menge von erhitztem und unter Druck gesetztem Schlamm in einen Reaktionsraum,
b) Zurückhalten der Menge von Schlamm in dem Reaktionsraum während einer Dauer, die für seine thermische Hydrolyse ausreichend ist,
c) Leerpumpen des Reaktionsraums von der Menge von Schlamm,
die Abkühlung des hydrolysierten Schlamms,
die Druckminderung des hydrolysierten Schlamms
und seine Beseitigung,
wobei die Anwendung auf den Schlamm eines Behandlungszyklus der thermischen Hydrolyse parallel in mindestens drei Reaktionsräumen durchgeführt wird, wobei in jedem derselben eine Aufeinanderfolge von Behandlungszyklen ausgeführt wird, wobei jeder der Reaktionsräume auf die Behandlung von verschiedenen Mengen von Schlamm ausgerichtet ist, wobei die Schritte a), b) und c) der Behandlungszyklen zeitlich von einem Reaktionsraum zum nächsten versetzt sind,
wobei eine gemeinsame gasförmige Glocke für die mindestens drei Reaktionsräume angebracht ist und der Druck, der in der gemeinsamen gasförmigen Glocke herrscht, gemessen und im Wesentlichen konstant auf dem Referenzdruck gehalten wird.

2. Verfahren nach Anspruch 1, **dadurch gekennzeichnet, dass** es einen Schritt des Anpassens des Drucks, der in der gemeinsamen gasförmigen Glocke herrscht, umfasst, wobei der Schritt des Anpassens die Injektion eines Gases in die gemeinsame gasförmige Glocke, wenn der Druck, der in derselben herrscht, geringer als eine vorbestimmte untere Schwelle ist, und/oder die Beseitigung eines Teils des Gases, das in der gemeinsamen gasförmigen Glocke vorhanden ist, umfasst, wenn der Druck, der in derselben herrscht, höher als eine vorbestimmte obere Schwelle ist.

3. Verfahren nach Anspruch 2, **dadurch gekennzeichnet, dass** das Gas ausgewählt ist aus der Gruppe, bestehend aus frischem Dampf und einem inerten Gas.

4. Verfahren nach einem der Ansprüche 2 oder 3, **dadurch gekennzeichnet, dass** der Schritt des Anpassens automatisch ist.

5. Verfahren nach einem der Ansprüche 1 bis 4, **dadurch gekennzeichnet, dass** die Injektion von frischem Dampf in den unter Druck gesetzten Schlamm derart durchgeführt wird, dass der Schlamm auf eine Temperatur im Bereich zwischen 140 °C und 180 °C gebracht wird.

6. Verfahren nach einem der Ansprüche 1 bis 5, **dadurch gekennzeichnet, dass** der Referenzdruck im Bereich zwischen 3,5 bar a und 10 bar a liegt.

7. Verfahren nach einem der Ansprüche 1 bis 6, **dadurch gekennzeichnet, dass** die Injektion von Dampf dank Mitteln ausgeführt wird, enthalten in der Gruppe, bestehend aus den dynamischen Injektor-Mischern und den Dampfdiffusoren in Linie.

8. Verfahren nach einem der Ansprüche 1 bis 7, **dadurch gekennzeichnet, dass** es das Vorerhitzen des eintretenden Schlamms vorgelagert von der Injektion von frischem Dampf umfasst.

9. Verfahren nach Anspruch 8, **dadurch gekennzeichnet, dass** die Abkühlung des hydrolysierten Schlamms, Rückgewinnungsdampf erzeugt, und dadurch, dass es die Mischung aus Rückgewinnungsdampf mit dem eintretenden Schlamm für seine Vorerhitzung umfasst.

10. Verfahren nach Anspruch 8 oder 9, **dadurch gekennzeichnet, dass** der Rückgewinnungsdampf in den Schlamm vorgelagert von dem Schritt des Injizierens von frischem Dampf dank mindestens einem Mittel injiziert wird, enthalten in der Gruppe, bestehend aus den dynamischen Injektor-Mischern, den Dampfdiffusoren in Linie und den Stofflöser-Mischern.

11. Verfahren nach einem der Ansprüche 1 bis 10, **dadurch gekennzeichnet, dass** die Dauer von Schritt a) im Bereich zwischen 10 und 120 mn liegt, die Dauer von Schritt b) im Bereich zwischen 10 und 120 mn liegt, die Dauer von Schritt c) im Bereich zwischen 10 und 120 mn liegt.

12. Verfahren nach einem der Ansprüche 1 bis 11, **dadurch gekennzeichnet, dass** die Menge von zu behandelndem Schlamm eine Trockenheit aufweist, die im Bereich zwischen 10 Gew% und 40 Gew% Trockenmasse liegt.

13. Anlage zur Ausführung des Verfahrens nach einem der Ansprüche 1 bis 12, **dadurch gekennzeichnet, dass** sie Folgendes umfasst:
Mittel zur Zuführung von Schlamm (1);
Mittel zur Unter-Druck-Setzung (2, 2a, 2b) des Schlamms;
Mittel zur Zuführung von frischem Dampf (3) und Mittel zur Mischung (4, 4a, 4b) des frischen Dampfs mit dem Schlamm;
Mittel zur Verteilung (5) der Mengen von Schlamm von den Mitteln zur Mischung alternativ in mindestens drei Reaktionsräumen (7a, 7b, 7c) für die thermische Hydrolyse des Schlamms;
Mittel zur Beseitigung (8) der Mengen von hydrolysiertem Schlamm alternativ von jedem der mindestens drei Reaktionsräume (7a, 7b, 7c) hin zu Mitteln zur Abkühlung und Mitteln zur Druckminderung (10, 10a, 10b) des hydrolysierten Schlamms;
Mittel zur Entfernung (11, 11a, 11b) des druckgeminderten hydrolysierten Schlamms;
wobei die mindestens drei Reaktionsräume (7a, 7b, 7c) eine gemeinsame gasförmige Glocke (12) aufweisen und die gemeinsame gasförmige Glocke mit Mitteln zur Entfernung von Gas (13) und Mitteln zur Messung des darin herrschenden Drucks (15) versehen ist.

14. Anlage nach Anspruch 13, **dadurch gekennzeichnet, dass** die Mittel zur Mischung (4, 4a, 4b) des frischen Dampfs mit dem Schlamm mindestens einen dynamischen Injektor-Mischer (18, 18a, 18b) oder mindestens einen Dampfdiffusor in Linie (22, 22a, 22b) umfassen, der mit den Mitteln zur Zuführung von frischem Dampf verbunden ist.

15. Anlage nach Anspruch 13 oder 14, **dadurch gekennzeichnet, dass** die gemeinsame gasförmige Glocke (12) mit Mitteln zur Injektion von Gas (16) versehen ist.

16. Anlage nach einem der Ansprüche 13 bis 15, **dadurch gekennzeichnet, dass** die Reaktionsräume (7a, 7b, 7c) jeweils durch eine Reaktionsstruktur (19a, 19b, 19c) begrenzt sind.

17. Anlage nach einem der Ansprüche 13 bis 16, **dadurch gekennzeichnet, dass** die Reaktionsräume (7a, 7b, 7c) in einer einzigen Reaktionsstruktur (19) zusammengefasst sind, wobei jeder der Reaktionsräume (7a, 7b, 7c) ein Abteil der einzigen Reaktionsstruktur (19) darstellt.

18. Anlage nach einem der Ansprüche 14 bis 17, **dadurch gekennzeichnet, dass** sie eine Sicherheitswanne (7d) umfasst, die abgemessen ist, um mindestens eine Menge von Schlamm aufzunehmen, und Mittel zum Verteilen der Mengen von Schlamm von dem mindestens einen dynamischen Injektor-Mischer oder Dampfdiffusor in Linie hin zu der Sicherheitswanne (7d).

19. Anlage nach einem der Ansprüche 13 bis 18, **dadurch gekennzeichnet, dass** die Mittel zum Abkühlen des hydrolysierten Schlamms, Mittel umfassen, ausgewählt aus der Gruppe, bestehend aus den Wärmetauschern (20), den Mitteln zum Verdünnen des hydrolysierten Schlamms mit Industriewasser, den Mitteln zur Injektion von frischem Schlamm in den hydrolysierten Schlamm, den Mitteln zum Erzeugen von Rückgewinnungsdampf.

20. Anlage nach Anspruch 19, **dadurch gekennzeichnet, dass** sie mindestens einen Flashbehälter (23) umfasst, der den Rückgewinnungsdampf erzeugt.

21. Anlage nach einem der Ansprüche 19 oder 20, **dadurch gekennzeichnet, dass** sie mindestens einen Kanal zur Zuführung (25, 25a) des Rückgewinnungsdampfs vorgelagert von den Mitteln zur Mischung (4, 4a, 4b) von frischem Dampf mit dem Schlamm und Mitteln zur In-Kontakt-Bringung des Rückgewinnungsdampfs mit dem zu behandelnden Schlamm umfasst.

22. Anlage nach Anspruch 21, **dadurch gekennzeichnet, dass** die Mittel zur In-Kontakt-Bringung mindestens ein Mittel einschießen, ausgewählt aus den dynamischen Injektor-Mischern, den Dampfdiffusoren in Linie und den Stofflöser-Mischern (24).

23. Anlage nach Anspruch 19, **dadurch gekennzeichnet, dass** die Mittel zur Abkühlung des hydrolysierten Schlamms, einen Wärmetauscher vom Typ Schlamm-Schlamm-Tauscher einschließen.

## Claims

1. Method for the thermal hydrolysis of sludges **characterized in that** it comprises:
the pressurizing of sludges to be treated at a reference pressure of 2 bar a to 16 bar a,
the injection of live steam into said pressurized sludges so as to carry the temperature of these sludges to 120°C to 200°C,
the application to said pressurized and heated sludges of a cycle of thermal hydrolysis treatment comprising the steps consisting in:
a) conveying a batch of heated and pressurized sludges into a reaction space,
b) maintaining said batch of sludges in said reaction space for a duration sufficient for its thermal hydrolysis,
c) draining said reaction space of said batch of sludges,
the cooling of said hydrolyzed sludges,
the depressurizing of said hydrolyzed sludges,
and their removal,
the application to said sludges of a cycle of thermal hydrolysis treatment that is conducted in parallel in at least three reaction spaces in each of which a succession of treatment cycles is implemented, each of said reaction spaces being dedicated to the treatment of distinct batches of sludges, said steps a), b) and c) of said treatment cycles being staggered in time from one reaction space to the other,
a gas atmosphere common to at least three reaction spaces being provided and the pressure prevailing in said common gas atmosphere being measured and maintained so as to be essentially constant at said reference pressure.

2. Method according to claim 1 **characterized in that** it comprises a step of adjusting the pressure prevailing in said common gas atmosphere, said step of adjusting comprising the injection of a gas into said common gas atmosphere when said pressure prevailing in this gas atmosphere is below a predetermined lower threshold and/or the removal of a part of the gas present in said common gas atmosphere when said pressure prevailing in it is above a predetermined upper threshold.

3. Method according to claim 2, **characterized in that** said gas is chosen from the group constituted by live steam and inert gas.

4. Method according to any of the claims 1 to 3, **characterized in that** said step of adjustment is automatic.

5. Method according to any one of the claims 1 to 4, **characterized in that** the injection of live steam into said pressurized sludges is done so as to carry said sludges to a temperature of 140°C to 180°C.

6. Method according to any one of the claims 1 to 5, **characterized in that** said reference pressure ranges from 3.5 bar a to 10 bar a.

7. Method according to any one of the claims 1 to 6, **characterized in that** the injection of live steam is done using means included in the group constituted by dynamic mixer-injector device and inline steam injection heaters.

8. Method according to any one of the claims 1 to 7 **characterized in that** it comprises the pre-heating of said incoming sludges upstream to the injection of live steam.

9. Method according to claim 8 **characterized in that** the cooling of the hydrolyzed sludges produces recovery steam and **in that** it comprises the mixing of recovery steam with said incoming sludges for their pre-heating.

10. Method according to claim 8 or 9 **characterized in that** the recovery steam is injected into said sludges upstream to said step for injecting live steam through at least one means included in the group constituted by dynamic mixer-heater devices, inline steam injection heaters and pulper-mixer devices.

11. Method according to any one of the claims 1 to 10 **characterized in that** the duration of the step a) ranges from 10 to 120 min, the duration of the step b) ranges from 10 to 120 min, and the duration of the step c) ranges from 10 to 120 min.

12. Method to any one of the claims 1 to 11 **characterized in that** said batch of sludges to be treated has a dryness of 10% to 40% by weight of dry matter.

13. Plant for implementing the method according to any one of the claims 1 to 12 **characterized in that** it comprises:
means for conveying sludges;
means for pressurizing said sludges;
means for conveying live steam and means for mixing said live steam with said sludges;
means for distributing batches of sludges from said mixing means alternately into at least three reaction spaces for the thermal hydrolysis of said sludges;
means for removing said batches of hydrolyzed sludges alternately from each of said at least reaction spaces to means for cooling and means for depressurizing said hydrolyzed sludges;
means for discharging depressurized hydrolyzed sludges;
said at least three reaction spaces having a common gas atmosphere and said common gas atmosphere being provided with means for removing gas and means for measuring the pressure prevailing therein.

14. Plant according to claim 13, **characterized in that** said means (4, 4a, 4b) for mixing said live steam with said sludges comprise at least one dynamic mixer-injector device (18, 18a, 18b) or at least one inline steam injection heater (22, 22a, 22b) connected to said means for conveying live steam.

15. Plant according to claim 13 or 14 **characterized in that** said common gas atmosphere (12) is provided with gas injection means (15).

16. Plant according to any one of the claims 13 to 15 **characterized in that** said reaction spaces (7a, 7b, 7c) are each demarcated by a reactor structure (19a, 19b, 19c).

17. Plant according to any one of the claims 13 to 16 **characterized in that** said reaction spaces (7a, 7b, 7c) are grouped together in a single reactor structure (19), each of said reaction spaces (7a, 7b, 7c) comprising a compartment of said single reactor structure (19).

18. Plant according to any one of the claims 13 to 17 **characterized in that** it comprises a standby tank sized to receive at least one batch of sludges and means for dispensing batches of sludges from said at least one dynamic mixer-injector device or inline steam injection heater or pulper-mixer towards said standby tank (7d).

19. Plant according to any one of the claims 13 to 18 **characterized in that** said means for cooling hydrolyzed sludges comprise means chosen from the group constituted by heat exchangers (20) means for diluting hydrolyzed sludges with industrial-use water, means for injecting fresh sludges into said hydrolyzed sludges, means for generating recovered steam.

20. Plant according to claim 19, **characterized in that** it comprises at least one flash tank (23) producing said recovered steam.

21. Plant according to one of the claims 19 or 20 **characterized in that** it comprises at least one conveying pipe (25, 25a) for conveying said recovered steam, placed upstream to said mixing means (4, 4a, 4b) for mixing live steam with the sludges and means for putting said recovered steam into contact with said sludges to be treated.

22. Plant according to claim 21 **characterized in that** said means for putting into contact include at least one means chosen from among dynamic mixer-injector devices, inline steam injection heaters and pulper-mixer devices (24).

23. Plant according to claim 19 **characterized in that** said means for cooling hydrolyzed sludges include a sludge/sludge exchanging type of heat exchanger.
